Europäisches Patentamt

European Patent Office

Office européen des brevets

(11) Veröffentlichungsnummer: **0 075 360**
**B1**

(12) # EUROPÄISCHE PATENTSCHRIFT

(45) Veröffentlichungstag der Patentschrift:
27.08.86

(21) Anmeldenummer: **82201133.4**

(22) Anmeldetag: **13.09.82**

(51) Int. Cl.⁴: **F 02 B 37/12**

(54) Verfahren zur Aufladung von Verbrennungsmotoren durch Abgaslader mit variablem Abgasschluckvermögen und nach diesem Verfahren arbeitender Verbrennungsmotor.

(30) Priorität: **22.09.81 CH 6093/81**

(43) Veröffentlichungstag der Anmeldung:
**30.03.83 Patentblatt 83/13**

(45) Bekanntmachung des Hinweises auf die Patenterteilung:
**27.08.86 Patentblatt 86/35**

(84) Benannte Vertragsstaaten:
**AT BE CH DE FR GB IT LI NL SE**

(56) Entgegenhaltungen:
**DE - A - 2 558 878**
**DE - A - 2 716 470**
**DE - A - 2 928 902**
**DE - A - 3 037 489**
**US - A - 3 233 403**
**US - A - 4 203 296**

(73) Patentinhaber: **BBC Aktiengesellschaft Brown, Boveri & Cie., Haselstrasse, CH-5401 Baden (CH)**

(72) Erfinder: **Jenny, Ernst, Dr., Widenweg 17, CH-5400 Baden (CH)**
Erfinder: **Mayer, Andreas, Fohrhölzilstrasse 14b, CH-5443 Niederrohrdorf (CH)**
Erfinder: **Moser, Peter, Weidgangstrasse 6, CH-8113 Boppelsen (CH)**

**Beschreibung**

Die vorliegende Erfindung betrifft ein Verfahren nach dem Oberbegriff des Patentanspruchs 1 und einen nach diesem Verfahren arbeitenden Verbrennungsmotor nach dem Oberbegriff der Patentansprüche 6 und 9.

Die Motoren von Personenautos werden durchschnittlich mit im Verhältnis zu den entsprechenden Werten bei Nennleistung kleinen mittleren effektiven Drücken $p_{me}$ und niedrigen mittleren Drehzahlen $n_m$ betrieben. Für einen Dieselmotor typisch sind z.B. mittlere effektive Drücke von 2 bis 3 bar und mittlere Drehzahlen von 2000 l/min bei einer maximalen Drehzahl von etwa 4000 l/min.

Im Mischverkehr – Stadt und Überland – laufen Personenwagenmotoren während 80% der Zeit mit einem $p_{me}$ unter 5 bar und auch der Kraftstoffverbrauch entfällt zu zwei Dritteln auf diesen Bereich. Die hohen Werte des $p_{me}$ werden nur bei zeitlich kurzen Beschleunigungsvorgängen benötigt, müssen dann aber rasch in der erforderlichen Höhe verfügbar sein. Lediglich bei höheren Autobahngeschwindigkeiten und steilen Bergstrecken werden dem Motor während längerer Zeit höhere Mitteldrücke und Drehzahlen abverlangt.

Aus diesen Gründen werden an das Betriebsverhalten aufgeladener Personenwagenmotoren andere Anforderungen gestellt als bei aufgeladenen Lastwagenmotoren, bei denen ein hoher Wirkungsgrad bei hoher Last verlangt wird, während nach dem vorher gesagten bei Automotoren der Kraftstoffverbrauch bei kleiner Last möglichst niedrig sein soll, wobei man auf Kosten dieser Forderung bei grosser Last höhere Verbräuche in Kauf nimmt.

Die bei niedrigen $p_{me}$ geforderte schnelle Zunahme des Drehmoments für schnelle Beschleunigungsvorgänge lässt sich mit Abgasturboladern nicht leicht erreichen. Denn bei Dieselmotoren ist in diesem Bereich die Abgastemperatur tief, sie beträgt im allgemeinen zwischen 150 und 250 °C, und infolgedessen auch die an der Turbine zur Verfügung stehende Energie klein. Bei diesen Verhältnissen arbeitet der Turbolader mit einem Gesamtwirkungsgrad von höchstens 30%. Dabei ist der Ladedruck tiefer als der Abgasdruck vor der Turbine, was eine negative Gaswechselarbeit, d.h., einen Wirkungsgradverlust bedeutet. Die negative Druckdifferenz liegt dabei üblicherweise zwischen 0,05 und 0,1 bar. Demgemäss liegt der Kraftstoffverbrauch eines Turboladermotors in diesem Gebiet auch höher als bei einem Saugmotor, bei dem Ansaugdruck und Auspuffgegendruck etwa gleich sind.

Die Verluste durch die negative Gaswechselarbeit nehmen bei Teillast mit zunehmendem Druckverhältnis an der Turbine zu. Zur Senkung dieser Verluste wurde bei einem bestimmten Ottomotor der Auspuffgegendruck durch Abblasen der Abgase vor der Turbine verringert. Diese Massnahme wird normalerweise nur im oberen Drehzahlbereich angewendet, da der Turbolader bezüglich des Ladedrucks bekanntlich auf den Luftbedarf des Motors im erwähnten Bereich der überwiegend benutzten $p_{me}$ abgestimmt wird, im oberen Drehzahlbereich charakteristischerweise aber zu hohe Drücke liefert, die durch dieses Abblasen auf den für den Motor zuträglichen Wert reduziert werden, um ihn nicht zu überlasten. Mit dieser Massnahme nähert man den tatsächlichen Ladedruckverlauf dem für den Motor theoretisch wünschenswerten an. Von einem idealen Verlauf kann dabei aber nicht gesprochen werden, da bei niedriger Motordrehzahl ein Drehmomentmanko, das sogenannte Turboloch, vorhanden ist. Für den Fahrbetrieb nachteilig ist dabei insbesondere, dass für einen Beschleunigungsvorgang der Turbolader zuerst auf Touren kommen muss, bevor sich das nötige stationäre Motordrehmoment einstellt. Diese Erscheinung ist unter der Bezeichnung «Turbolag» bekannt.

Nachteilig ist bei diesem Abblasen bei Teillast vor dem Turbineneintritt durch einen Abgasbypass, einem sogenannten «Wastegate», dass sich vor der Turbine sehr wenig Stau bildet und die Laderdrehzahl demgemäss noch tiefer bleibt. Es ergibt sich daher beim Beschleunigen zusätzlich zum schon erwähnten verzögerten Ansprechen des Laders, dem Turbolag, eine weitere Verzögerung, da sich der zum schnellen Hochdrehen der Turbine erwünschte Stau erst nach dem Schliessen des Wastegates einstellt. Bei Turboladern mit Hochdruckrezirkulation ist diese Verzögerung noch grösser, da sie erst bei höherem $p_{me}$, z.B. 5 bar, abgeschaltet werden darf.

Um die Nachteile konventioneller Abgasturbolader mit und ohne Wastegate zu vermeiden, sind verschiedentlich Laderturbinen mit variabler Schluckfähigkeit vorgeschlagen worden. Bei diesen, im folgenden als Varioturbolader bezeichneten Aufladeaggregaten, die gegebenenfalls auch regelbare Verdichter aufweisen können, wird mit verdrehbaren Düsenschaufeln, Doppelspiraleneinläufen, Membrandüsenringen, verschiebbaren Düsenringen u.a. der Eintrittsquerschnitt der Turbine verengt und damit ihre Schluckfähigkeit reduziert. Der verstärkte Stau sorgt für genügend Leistung an der Turbine, so dass sie schon bei niedriger Motordrehzahl schneller läuft und ein hohes Drehmoment entwickelt. Des weiteren ist mehr Energie vorhanden für ein schnelleres Hochdrehen des Verdichters in dem eingangs erwähnten Lastbereich, in dem das Beschleunigungsverhalten des Motors mit der vorliegenden, in den kennzeichnenden Teilen der Patentansprüche 1 und 7 definierten Erfindung verbessert werden soll.

Aus den Patentschriften DE-A-3 037 489 und DE-A-2 558 878 sind Wastegatesteuerungen bekannt, die für Ottomotoren mit Abgasturboladern ausgelegt sind, indem sie als Steuerungsgrössen den Saugrohrdruck und den Ladedruck benutzen. Demgegenüber ist die Einrichtung gemäss vorliegender Erfindung zwar vorzugsweise für die Verwendung bei Dieselmotoren gedacht, wobei die Steuerung in Abhängigkeit vom Ladedruck und der Stellung der Einspritzregelstange erfolgt. Es ist aber auch möglich, anstelle der Regelstange das Gaspedal oder dessen Gestänge eines Ottomotors mit den übrigen Elementen der Einrichtung zu kombinieren, so dass sie allgemein für aufgeladene Verbrennungsmotoren geeignet ist.

Die genannte Patentschrift DE-A-2 558 878 zeigt darüber hinaus die Verwendung einer zweiflutigen Abgasturbine, bei der nach Unterschreiten eines gewissen Mindestabgasstromes durch Schliessen einer Flut der Abgasstrom ausreichend gross ist, um mit einer Flut allein den bei dem betreffenden Betriebszustand erforderlichen Stau der Ladeluft vor der offenen Flut der Turbine zu erhalten. Gegenüber einer einflutigen Turbine erzielt man damit einen günstigeren Ladedruckverlauf über den Betriebsbereich. Mit einer Varioturbine, wie sie für die vorliegende Erfindung vorgeschlagen wird, erhält man aber eine noch bessere Annäherung des Ladedruckverlaufes an den Idealverlauf.

Die US-A-3 233 403 offenbart wie vorliegend ebenfalls eine Steuerung eines Wastegateventils in Abhängigkeit vom Ladedruck und der Stellung eines Drosselgestänges. Die zu diesem Zweck vorgeschlagene Einrichtung benötigt einen eigenen Druckölkreislauf mit Pumpe und diversen Nebeneinrichtungen. Die dabei erforderliche Pumpenantriebsleistung und die Leckanfälligkeit der unter Druck stehenden Elemente einer solchen Einrichtung verschlechtern jedoch den Wirkungsgrad und verteuern die Herstellungskosten und den Betrieb eines solchen Ladermotors.

Die vorliegende Erfindung hatte daher auch eine solche Konzeption der Steuerungseinrichtung zum Ziel, bei der die vorerwähnten Nachteile vermieden sind.

Die US-A-4 203 296 beschreibt wie die beiden obenerwähnten deutschen Patentschriften ebenfalls eine Einrichtung für die Steuerung eines Wastegates bei einem Ottomotor mit Abgasturbolader, wobei als Steuerungsgrössen ebenfalls der Saugrohrdruck und der Ladedruck benutzt werden. Im Leerlauf schliesst dabei das Wastegateventil den Hauptstromabgaskanal ganz ab, so dass der ganze Querschnitt des Tastegatekanals für die Abfuhr der Abgase in den Auspuff zur Verfügung steht. Um jedoch die Turbine des Abgasturboladers auf minimaler Drehzahl zu halten, wird durch eine enge Umgehungsleitung ein geringer Abgasstrom aus dem Wastegatekanal vor die Turbine abgezweigt. Für Dieselmotoren eignet sich diese Einrichtung nicht.

Das Prinzip der hier vorgeschlagenen Einrichtung ist auch bei Verbrennungsmotoren mit anderen abgasgetriebenen Aufladeaggregaten anwendbar, insbesondere bei solchen mit gasdynamischen Druckwellenladern mit Einrichtungen zur Änderung des Abgasschluckvermögens, wie Wastegate und Rezirkulationskanal. Denn auch bei einem mit einem Druckwellenlader kombinierten Dieselmotor ist im Gebiet tiefer $p_{me}$ die Abgastemperatur und damit das Energieangebot durch die Abgase klein. Der Motor muss ebenfalls negative Gaswechselarbeit leisten, da bei ihm in diesem Betriebszustand der Abgasdruck üblicherweise um 0,1–0,15 bar grösser als der Spüldruck ist. Ein solcher Druckwellenlader ist einem Abgasturbolader bezüglich Beschleunigungsfähigkeit seines luftfördernden Elements, das von einem angetriebenen Zellenrad gebildet wird, zwar deutlich überlegen, doch lässt sich auch sein Ansprechverhalten bei Lastwechseln und insbesondere sein Kraftstoffverbrauch durch eine erfindungsgemässe Steuerung der Schluckfähigkeit des Druckwellenladers verbessern.

Die Erfindung wird im folgenden unter Bezugnahme auf die Zeichnungen und dort dargestellte Ausführungsbeispiele für nach dem erfindungsgemässen Verfahren arbeitende Dieselmotoren näher beschrieben.

In den Zeichnungen stellen dar:

Fig. 1 das durchschnittliche Betriebskennfeld von Personenwagenmotoren,

Fig. 2 den Zusammenhang zwischen dem mittleren effektiven Druck eines Turboladermotors und der Drehzahl ($p_{me}$-$n_m$-diagramm) bei zwei Turboladerbauarten, die

Fig. 3 und 4 den Zusammenhang zwischen dem Massenfluss durch den Motor und den Druckverhältnissen des Verdichters bzw. der Turbine für verschiedene Turboladerbauarten,

Fig. 5 schematisch einen Turboladermotor mit Varioturbolader, Wastegate und Rezirkulation, die

Fig. 6 und 7 zwei $p_{me}$-$n_m$-Diagramme für nach dem erfindungsgemässen Verfahren betriebene Turboladermotoren,

Fig. 8 schematisch ein Ausführungsbeispiel eines erfindungsgemässen Turboladermotors,

Fig. 9 das Diagramm einer vorteilhaften Steuerung des Turboladers bei einem Motor gemäss Fig. 8,

Fig. 10 ein weiteres Ausführungsbeispiel eines erfindungsgemässen Turboladermotors, und die

Fig. 11 einen Verbrennungsmotor mit Druckwellenlader mit einer Steuereinrichtung, wie sie auch beim Turboladermotor nach Fig. 10 angewendet wird.

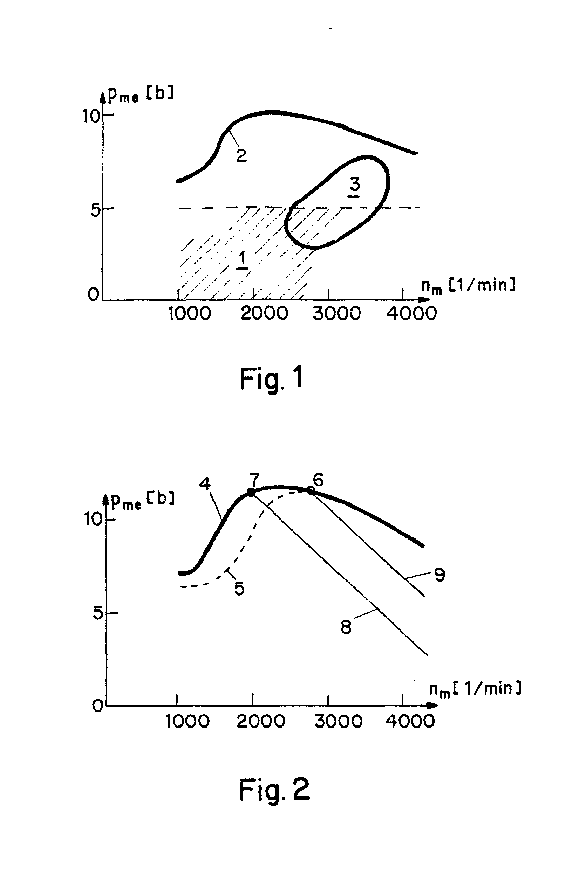

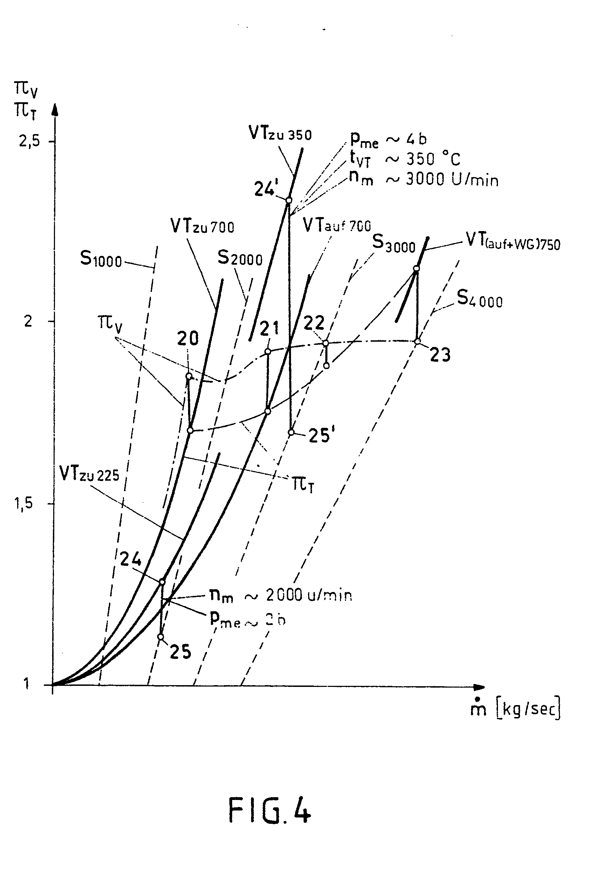

Bei dem in Fig. 1 dargestellten $p_{me}$-$n$-$_m$-Diagramm eines typischen Personenwagenmotors ist das eingangs erwähnte Feld der mittleren effektiven Verbrennungsdrücke mit dem das Fahrzeug überwiegend betrieben wird, mit 1 bezeichnet. Der Bereich, der für Autobahn- und Passfahrten in Anspruch genommen wird, ist mit 3 und die Kurve für das zum Beschleunigen benutzte maximale Drehmoment ist mit 2 bezeichnet.

Fig. 2 zeigt den Verlauf des mittleren effektiven Druckes $p_{me}$ bei einem Motor mit einem konventionellen Turbolader mit Wastegate und für einen Motor mit einem Varioturbolader mit einem Wastegate. Dabei stellt die voll ausgezogene Kurve 4 den Druckverlauf $p_{me}$ ($n_m$) eines Varioturboladers dar, die strichlierte Kurve 5 den entsprechenden Verlauf eines normalen Turboladers mit konstantem Schluckvermögen der Turbine. Bis zu der dem Punkt 6 entsprechenden Drehzahl liegt die Kurve 4 für den Varioturbolader über der Kurve 5 für den normalen Lader, erst darüber nutzt letzterer den Abgasstrom gleich gut aus wie der Varioturbolader und gehen die beiden Kurven ineinander über. Da beim Varioturbolader der für den Motor zulässige Ladedruck bei einer niedrigeren, dem Punkt 7 entsprechenden Motordrehzahl erreicht wird als beim normalen Turbolader, muss die Schluckfähigkeit der Varioturbine kontinuierlich erhöht werden, und zwar ab der dem Punkt 7 entsprechenden Drehzahl entlang der Linie 8, wogegen wie beim normalen Turbolader das Wastegate erst ab Punkt 6 respektive entlang der Linie 9 zu öffnen beginnt. Punkt 6 kann aber auch anders als beim normalen Turbomotor gewählt werden.

Die Fig. 2 zeigt also, dass ein Motor mit einem Varioturbolader beim gewählten Beispiel in dem interessierenden Drehzahlbereich zwischen etwa 1000 und 2200 U/min ein höheres Drehmoment und damit die bessere Beschleunigung bietet.

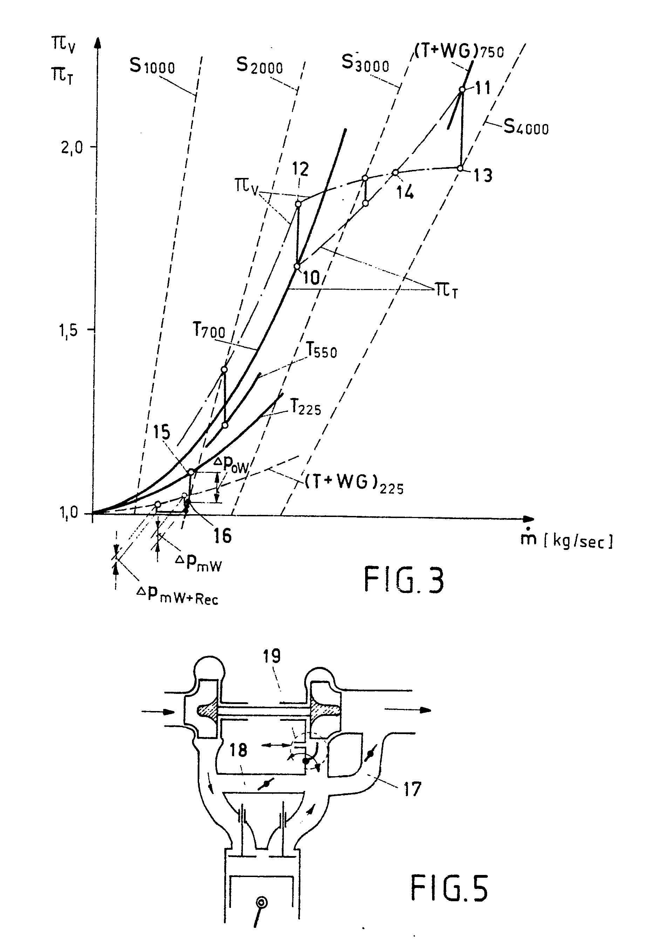

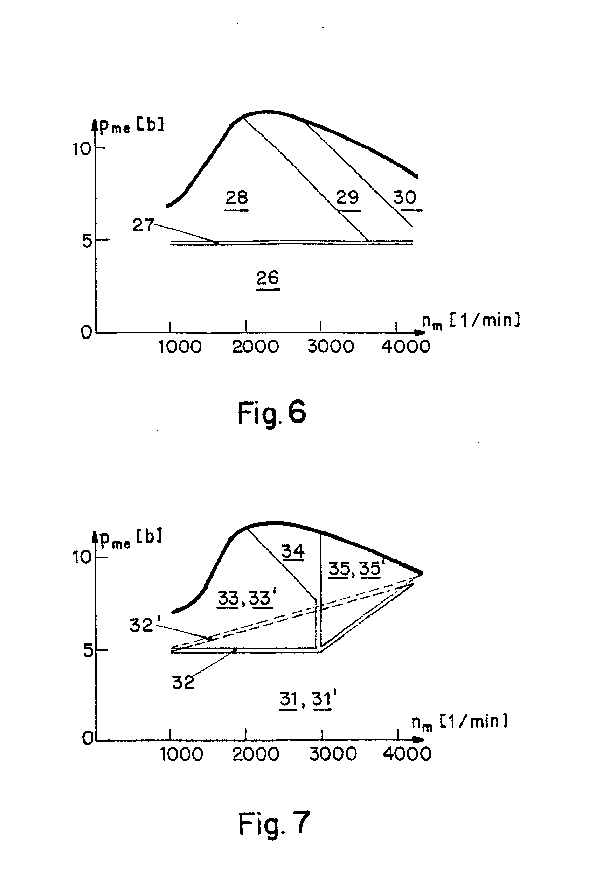

In Ergänzung zu dem eingangs Gesagten wird das Verhalten eines konventionellen Turboladers anhand des Diagrammes nach Fig. 3 und anschliessend anhand der Fig. 4 das Verhalten eines Turboladermotors mit Varioturbine, Wastegate und eventuell Abgasrezirkulation beschrieben.

Die beiden Diagramme geben den Zusammenhang zwischen dem Massenfluss' in kg/sec durch einen typischen Personenwagenmotor mit Wastegate unter der Annahme $\dot{m}_m = \dot{m}_v = \dot{m}_T$ und dem Druckverhältnis $\pi_T$ der Turbine bzw. $\pi_V$ des Verdichters wieder. Die strichlierten Geraden $S_{1000}$ bis $S_{4000}$ sind die Schlucklinien des Motors $\dot{m}_v (\pi_v)$ bei den Drehzahlen $n_m = 1000$ bis $n_m = 4000$ U/min. Die voll ausgezogenen parabelförmigen Kurven $T_{700}$, $T_{550}$ und $T_{225}$ sind die Turbinenschlucklinien $\dot{m}_T (\pi_T)$ bei einer Gaseintrittstemperatur von 700 °C, entsprechend einer Drehzahl von ca. $n_m = 2500$ U/min, bei der das Wastegate gerade noch geschlossen ist, bei einer Gaseintrittstemperatur von 550 °C, mit der das Drehmoment $M_d$ bei $n_m = 2000$ U/min erreicht wird, sowie bei 225 °C Gaseintrittstemperatur, d.h., im Teillastbereich mit einem $p_{me} = 2$ bar und $n_m = 2000$ U/min. Die Kurven $(T+WG)_{750}$ und $(T+WG)_{225}$ stellen die Schlucklinien für die Turbine plus offenem Wastegate bei 750 bzw. 225 °C Gaseintrittstemperatur dar. Der $M_{d\ max}$-Kurve des Motors entsprechend liegen die Betriebspunkte für die Turbine auf der lang strichlierten Kurve zwischen dem Punkt 10 auf der Linie für $T_{700}$ und dem Punkt 11 auf der Linie $(T+WG)_{750}$ und für den Verdichter auf der strichpunktierten Kurve zwischen dem Punkt 12 und dem Punkt 13 auf der Schlucklinie $S_{4000}$. Man erkennt, dass der Druckunterschied zwischen dem Verdichterauslass und dem Turbineneinlass bis zum Punkt 14, dem Schnittpunkt der beiden vorerwähnten Linien, positiv ist und anschliessend bis zur maximalen Motordrehzahl negativ wird. Im letzteren Bereich ist der Druck vor der Turbine also höher als am Verdichterauslass.

Zum Verständnis der vorliegenden Erfindung wichtiger sind die diesbezüglichen Verhältnisse beim konventionellen Turbolader im Teillastbereich, in dem das Drehmomentverhalten mit der Erfindung verbessert werden soll. Sie werden am Beispiel eines Zustandes mit $p_{me} = 2$ bar, $n_m = 2000$ U/min und der Temperatur $T_{225}$ vor der Turbine erläutert. Bei geschlossenem Wastegate stellt sich dabei ein $\pi_T = 1,1$ ein, siehe Punkt 15. Es ergibt sich dabei ein Überdruck $\Delta p$ vor der Turbine gegenüber dem Ladedruck von 0,07 bar, siehe Strecke 15–16 = $\Delta p_{oW}$ (oW = ohne Wastegate). Der Kraftstoffverbrauch erhöht sich durch die entsprechende Gaswechselarbeit des Kolbens um ca. 1,6%. Bei offenem Wastegate sinkt der Überdruck auf $\Delta p_{mW} = 0,03$ bar und wenn auch Hochdruckrezirkulation zur Anwendung kommt, sinkt dieser wirkungsgradverschlechternde Überdruck noch weiter auf $\Delta p_{mW+Rez}$.

Anhand des Diagramms in Fig. 4 wird nun das Verhalten eines Motors mit einem Varioturbolader, einem Wastegate und mit Abgasrezirkulation besprochen. Wenn der Varioturbolader gegenüber einem konventionellen Turbolader auch einen Fortschritt bezüglich des Drehmomentverhaltens im unteren Drehzahlbereich darstellt, so weist er doch noch einige betriebliche Mängel auf, die u.a. mit der vorliegenden Erfindung behoben werden sollen. Der prinzipielle Aufbau eines solchen Motors geht aus Fig. 5 hervor. Darin bedeuten 17 einen Wastegatekanal, 18 einen fallweise vorhandenen Rezirkulationskanal und der strichliert eingeringelte Bereich 19 den Turbineneinlass mit verstellbarem Durchflussquerschnitt eines Varioturboladers. Für Varioturbolader gibt es viele Lösungsvorschläge, u.a. auch für unterteilte Auspuffleitungen bei Anwendung des Stossbetriebs.

Neben einigen bereits von der Fig. 3 her bekannten Symbolen kommen in Fig. 4 für die Schlucklinien des Varioturboladers VT die Bezeichnungen $VT_{zu}$ = Varioturbolader zu, d.h., auf engsten Durchflussquerschnitt gedrosselt, und $VT_{auf}$ = Varioturbolader offen, mit maximalem Durchflussquerschnitt, vor. Die Indizes 225 etc. bedeuten jeweils die Abgastemperatur am Turbineneinlass.

Das maximale Drehmoment entspricht dem Punkt 20, es wird also schon bei einer Motordrehzahl von unter 2000 U/min erreicht. Da der höchstzulässige Ladedruck damit erreicht ist, beginnt jetzt das Öffnen des Eintrittsquerschnitts des Varioturboladers, welcher Vorgang bei 21 abgeschlossen ist. Der weitere Verlauf bis 22 verhält sich dann wie bei einer konventionellen Turbine mit konstantem Eintrittsquerschnitt. Abweichend davon kann ihr voll offener Querschnitt gegenüber einer konventionellen Turbine für den gleichen Motor mit grösserem Durchflussquerschnitt bei voller Öffnung ausgeführt werden, um die durch das Wastegate abzublasende Menge verringern oder im Extremfall auf dasselbe verzichten zu können. Für die Fig. 4 ist aber ein Wastegate angenommen, das im Bereich von 22 bis 23 in Funktion ist.

Ein Varioturbolader liefert dem Motor also bereits bei niedrigeren Drehzahlen genügend Luft für das gewünschte höhere Drehmoment in dem in der Einleitung erwähnten, überwiegend benutzten Betriebsbereich eines typischen Personenwagenmotors.

Hingegen gibt es Fahrzustände, die ungünstiger liegen als beim normalen Turboladermotor. Beim Teillastpunkt 24 mit $n_m = 2000$ U/min und $p_{me} = 2$ bar staut sich das Auspuffgas auf ein $\pi_T = 1,3$ und der Abgasüberdruck gegenüber dem Ladedruck, dargestellt durch die Strecke 24–25, erreicht $\Delta p_{VT} = 0,15$ bar, was gegenüber einem normalen Turbolader einen um 1,85% höheren Kraftstoffverbrauch verursacht. Dies ist zwar nicht unbedingt prohibitiv, da bei einem Varioturbolader der Motor für gleiche Fahrleistungen im erwähnten Betriebsbereich kleiner ausgeführt werden kann. Es gibt aber noch viel ungünstigere Fahrzustände. Z.B. ist bei Fahrt in der Ebene mit ca. 100 km/h das $p_{me}$ ca. 4 bar, $n_m$ ca. 3000 U/min und die Temperatur vor der Turbine ca. 350 °C. Dabei beträgt der Überdruck $\Delta p_{VT}$ ca. 0,6 bar, repräsentiert durch die Strecke 24'–25'. Die Ladedruckregelung steht dabei kurz vor dem Öffnen des Varioturboladers. Gegenüber einem normalen Turbolader bedeutet dies einen Mehrverbrauch an Kraftstoff um 10%.

Der Nachteil des Varioturboladers besteht darin, dass bei kleinem $p_{me}$ und demgemäss tiefer Temperatur vor der Turbine die Differenz von Abgasdruck vor der Turbine und Ladedruck wegen des höheren Druckniveaus des Varioturboladers grösser ist als beim normalen Turbolader. Dazu kommt, dass die Verringerung der Turbinenschluckfähigkeit häufig mit einer gewissen Wirkungsgradverschlechterung einhergeht.

Mit dem im folgenden beschriebenen Verfahren zum Betrieb eines Turboladermotors sollen diese Mängel beseitigt werden.

Aus Fig. 6 geht hervor, wie ein Motor mit Varioturbolader und Wastegate, eventuell noch mit Abgasrezirkulation, betrieben werden kann, um ein im ganzen Lastbereich befriedigendes Drehmomentverhalten bei verbessertem Wirkungsgrad zu erzielen. Das Diagramm zeigt die Aufteilung des gesamten Betriebsbereiches in verschiedene Lastgebiete 26 bis 30, in denen im Sinne der Erfindung jeweils ein bestimmtes Kollektiv von Zuordnungen zwischen dem mittleren effektiven Druck $p_{me}$ und der Motordrehzahl einzuhalten ist, wobei das gewünschte $p_{me}$ durch Steuerung des Ladedrucks und der Kraftstoffeinspritzmenge eingestellt wird. Das Verfahren besteht nun darin, dass bis zu einem gewissen $p_{me}$, im gezeigten Beispiel bis zu 5 bar, der Motor so weit wie möglich als reiner Saugmotor betrieben wird, was bedeutet, dass die Abgaskanäle durch die Turbine, das Wastegate und, falls vorhanden, auch der Rezirkulationskanal, maximal geöffnet sind. Der Motor läuft dann im Saugbetrieb und die Differenz von Abgasgegendruck und Ladedruck wird gegenüber einem Laderbetrieb auf sehr kleine Werte abgebaut. Ein eventueller Kraftstoffmehrverbrauch wird also sehr gering sein. Es kann vorgesehen sein, das Wastegate in diesem Gebiet noch stärker zu öffnen als es die Funktion als Abgasbypass im Grenzbereich des Ladedrucks erfordert.

Gegenüber den bekannten Abgasturboladereinrichtungen wird der Turbolag kleiner und das Drehmomentmanko im Bereich des «Turboloches» verringert.

Das Gebiet 27 ist die Schaltzone, in der ein Beschleunigungsmanöver durch schnellstmögliches Schliessen des Wastegates und gegebenenfalls des Rezirkulationskanals und Verstellen des Einlassquerschnittes der Varioturbine auf seinen Kleinstwert eingeleitet wird. Der schnell einsetzende Abgasstau führt der Turbine schnell Energie zu und beschleunigt ihr Hochfahren gegenüber einem normalen Turbolader.

Falls eine Abgasrezirkulation zur Reduktion von $NO_x$ nötig ist, so darf der Abgasgegendruck nicht zu stark abgebaut werden, da das Überströmen sonst in Frage gestellt ist. Um die Rezirkulation zu gewährleisten, muss eventuell das Wastegate geschlossen bleiben und/oder darf auch der Turbineneintrittsquerschnitt nicht voll geöffnet werden. Es gilt dabei einen Kompromiss zwischen Verbrauch und Abgasemission zu finden.

Im Gebiet 28 wird die Turbine mit dem engsten Eintrittsquerschnitt, also kleinster Schluckfähigkeit betrieben. Es steht daher genügend gestautes Abgas für ein schnelles Ansprechen der Turbine bei Laststeigerungen zur Verfügung. Im Gebiet 29 wird zur Vermeidung unzulässig hoher $p_{me}$ der Einlassquerschnitt der Varioturbine sukzessive bis zum Maximum geöffnet und anschliessend beginnt im Gebiet 30 das Öffnen des Wastegates bis zur jeweils erforderlichen Stellung des Drosselorgans.

Das Diagramm der Fig. 7 zeigt zwei vorteilhafte Modifikationen des Verfahrens nach Fig. 6, bei denen der Verlauf der Schaltzonen 32, bzw. 32' bezüglich Drehmomentverlauf und Wirkungsgrad noch günstiger ist. Dabei ist das Gebiet des Saugbetriebs in beiden Fällen erweitert. Und zwar ist das Gebiet 31 nach oben durch die voll ausgezogene Doppellinie, die Schaltzone 32, begrenzt, die bis zum Beginn des Öffnens des Wategates parallel zur Abszissenachse und anschliessend bis zur Höchstdrehzahl mit konstanter Steigung verläuft. Die dazugehörigen Gebiete für den Lauf mit kleinster Schluckfähigkeit der Varioturbine, mit zunehmendem Eintrittsquerschnitt der Varioturbine und mit sich stetig öffnendem Wastegate sind mit 33, 34 bzw. 35 bezeichnet.

Bei der zweiten Variante verläuft die Schaltzone 32', dargestellt durch die strichlierte Doppellinie, mit konstanter Steigung über den ganzen nutzbaren Drehzahlbereich. Der Betriebsbereich als Saugmotor vergrössert sich dann auf 31' und die zwei Gebiete 33 und 35 der ersten Variante oberhalb der Schaltzone 32' reduzieren sich auf die Gebiete 33' und 35'.

Solche Steuerungsprogramme für das Öffnen und Schliessen der Elemente zur Änderung des Massenflusses sind heutzutage am vorteilhaftesten durch Mikroprozessoren zu realisieren, es kommen dafür aber selbstverständlich auch konventionelle Mittel, wie hydraulische, pneumatische, elektrische u.dergl. Steuerungseinrichtungen in Frage.

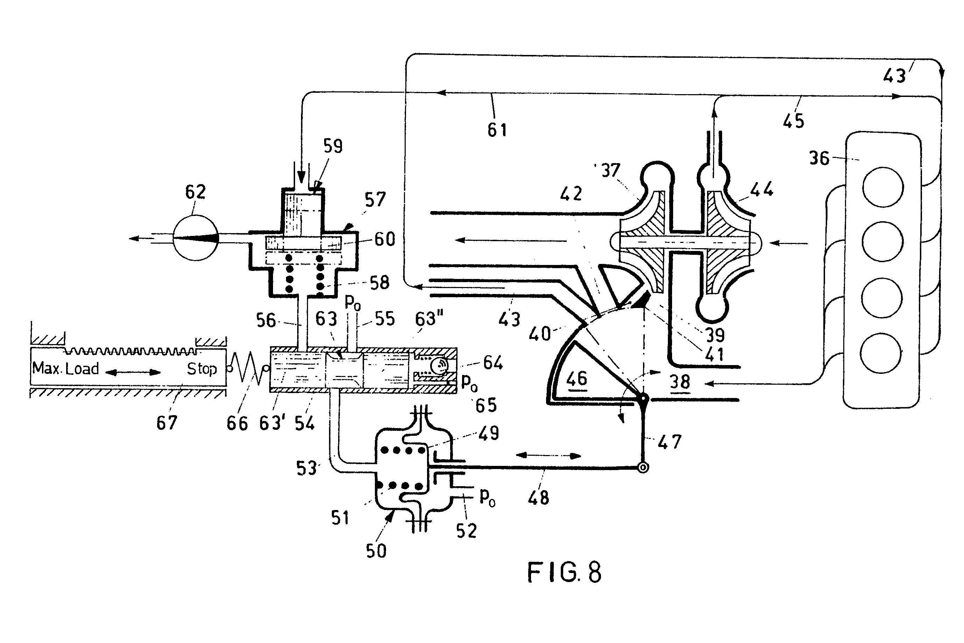

Die Fig. 8 zeigt das Schema eines Dieselmotors zur Realisierung der in Fig. 6 dargestellten Steuerung des mittleren effektiven Druckes $p_{me}$. Der Motor 36 speist eine Varioturbine 37 über den Abgaskanal 38. Dem Abgas stehen drei Wege offen: Durch die Turbine 37 über einen Hauptstromkanal 39 und einen Nebenstromkanal 40, die durch eine Scheidewand 41 voneinander getrennt sind;

durch ein Wastegate 42 und einen Rezirkulationskanal 43. Das Wastegate bläst ins Freie ab, der Rezirkulationskanal 43 mündet in eine vom Verdichter 44 in den Motor führende Ladeluftleitung 45.

Die Steuereinrichtung weist einen im Turbineneinlaufgehäuse schwenkbar gelagerten Drosselschieber 46 mit einem Hebelarm 47 auf, an dem eine Stange 48 einer Membran 49 angreift. Diese Membran ist im Gehäuse eines Servomotors 50 dichtend eingespannt und durch eine Feder 51 im Sinne einer Bewegung des Drosselschiebers 46 in seine mit Vollinien gezeichnete, voll geöffnete Stellung belastet. Der Raum rechts der Membran 49 im Servomotor 50 steht durch eine Leitung 52 mit der Atmosphäre in Verbindung, während der Raum links der Membran über eine Leitung 53 und das Innere eines Steuerzylinders 54 je nach Stellung eines Steuerkolbens 63 über eine Leitung 55 mit der Atmosphäre oder über eine Leitung 56 mit dem Inneren eines Steuerdruckmodulators 57, in dem ein durch eine Feder 58 belasteter Kolben 59 mit einem Ventilteller 60 verschieblich geführt ist, kommuniziert. Der Zylinderraum oberhalb des Kolbens 59 kommuniziert über eine Steuerluftleitung 61 mit der Ladeluftleitung 45, während der den Ventilteller 60 umgebende Raum mit einer Vakuumquelle 62 in Verbindung steht.

Der Steuerzylinder 54 enthält einen Steuerkolben 63 mit Steuerkolbenabschnitten 63', 63'' und im rechten Zylinderboden ein federbelastetes Rückschlagventil 64 und eine Drosselbohrung 65. Der Steuerkolben 63 ist über ein federelastisches Glied 66 mit einer Einspritzpumpenregelstange 67 verbunden, die über ein nicht dargestelltes Gestänge durch das Gaspedal vom Fahrer gesteuert wird.

Ein Steuerzyklus läuft wie folgt ab: Im Teillastbereich, in dem der Motor im Saugbetrieb läuft, wird der Drosselschieber 46 durch die Feder 51 in der mit Vollinien gezeichneten Stellung an seinem unteren Anschlag gehalten, wobei alle Abgaswege durch die Varioturbine 37, das Wastegate 42 und den Rezirkulationskanal 43 frei sind. Es herrscht auf beiden Seiten der Membran 49 Atmosphärendruck, da die Räume zu beiden Seiten der Membran über die Leitungen 52 bzw. 53, den Zylinderraum zwischen den beiden Steuerkolbenabschnitten 63' und 63'' sowie über die Leitung 55 mit der Atmosphäre in Verbindung stehen, so dass die Kraft der Feder 51 voll zur Wirkung kommt. Im Steuerdruckmodulator 57 herrscht über dem Kolben 59 der geringe Leerladedruck des Saugbetriebs, darunter der von der Vakuumquelle 62, beispielsweise der Bremshilfevakuumpumpe, erzeugte Unterdruck. Die Feder 58 ist so bemessen, dass sie bei diesen Drücken beidseits des Kolbens diesen in der voll gezeichneten, vollständig offenen Stellung hält.

Beim Gasgeben verschiebt sich die Regelstange 67 nach links, wobei der Steuerkolben 63 infolge der federelastischen Verbindung durch das Glied 66 folgt und ab einer gewissen Gashebelstellung, die dem Übergang vom Saugbetrieb zum Laderbetrieb entspricht, mit der Steuerkante des linken Steuerkolbenabschnittes 63' die Leitung 56 zum Steuerdruckmodulator 57 freigibt. Dabei wird die Leitung 55 in die Atmosphäre verschlossen, da der Abstand der Steuerkanten der Steuerkolbenabschnitte 63' und 63'' gleich ist dem Abstand zwischen den beiden Leitungen 55 und 56. Dadurch kommt der unter dem Kolben 59 herrschende Unterdruck im federseitigen Raum des Servomotors 50 zur Wirkung, so dass der atmosphärische Überdruck auf der anderen Seite der Membran 49 diese gegen den Widerstand der Feder 51 verschiebt und damit den Drosselschieber 46 in einem Zuge in die strichpunktiert gezeichnete Stellung schwenkt, bei welcher der für die Beschleunigung erforderliche starke Stau vor der Varioturbine erzeugt wird.

Der daraufhin steigende Ladedruck wirkt über die Leitung 61 auf den Kolben 59 und verengt zunehmend gegen den Widerstand der Feder 58 den Ringspalt zwischen dem Ventilteller 60 und seinem Sitz im Gehäuse des Steuerdruckmodulators 57. Die entstehende Drosselung verringert den Unterdruck im Servomotor 50, infolge gezielter Leckage zwischen dem Steuerkolbenabschnitt 63'' und der Leitung 55, wodurch die Feder 51 den Drosselschieber 46 in Abhängigkeit vom zunehmenden Ladedruck wieder gegen die Ausgangslage zurückschwenkt und nacheinander den Eintrittsquerschnitt und das Wastegate öffnet, bis beim maximal zulässigen Ladedruck der Ventilteller 60 den Durchflussquerschnitt soweit verringert hat, dass der Drosselschieber 46 das Wastegate so weit wie nötig geöffnet hat, der Rezirkulationskanal 43 aber geschlossen bleibt.

Bei einer Lastsenkung wird die Regelstange 67 zurückgeführt, die Einspritzmenge, demnach der Abgasdruck und der Ladedruck nehmen ab, der Ventilteller 60 wird wieder einen grösseren Querschnitt freigeben. Im federseitigen Raum des Servomotors 50 entsteht wieder ein stärkerer Unterdruck, wodurch wieder ein mehr oder minder grosser Teil des Querschnittes der Abgaswege durch Wastegate und Varioturbine verschlossen wird. Beim Heruntergehen bis auf die Einspritzmenge, unterhalb welcher der Motor in den Saugbetrieb übergeht, verschiebt die Regelstange 67 den Steuerkolben soweit, dass die Leitung 56 wieder abgesperrt wird. Die Feder 51 hält dann den Drosselschieber 46 bis zu einem erneuten, stärkeren Gasgeben im Leerlaufanschlag. In der Ruhestellung sind immer alle Abgaswege ganz offen, es handelt sich dabei also um eine Sicherheitsschaltung.

Das Rückschlagventil 64 im Steuerzylinder 54 erlaubt es dem Steuerkolben 63, im Falle einer Laststeigerung der Regelstange 67 schnell zu folgen, wogegen die Dämpfungsbohrung 65 bei geschlossenem Rückschlagventil ein Zurückschwenken des Drosselschiebers 46 während der Schaltpausen beim Hochbeschleunigen des Fahrzeuges vermeidet. Wie hier beschrieben, genügt es, den Steuerkolben 63 in zwei Stellungen zu steuern: Leitung 56 offen, Leitung 55 zu, oder umgekehrt. Die Modulation des Steuerdrucks erfolgt dann allein durch Veränderung des Ringquerschnitts um den Ventilteller 60 durch den Ladedruck, sowie die leckagebedingte Belüftung des Unterdruckraumes im Servomotor 50.

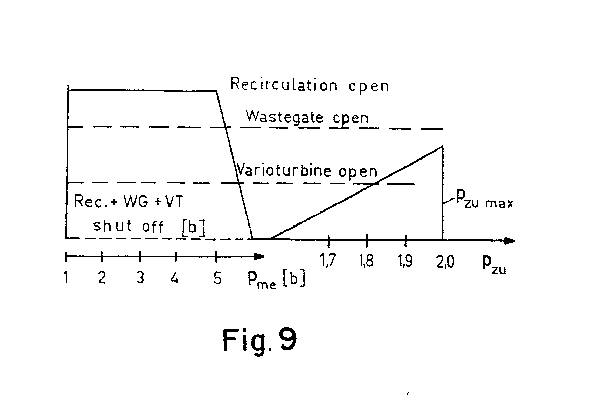

Es könnte zweckmässig sein, die Steuerung so auszulegen, dass das Wastegate bei kleiner Last weiter geöffnet wird als im oberen Lastbereich, etwa gemäss dem in Fig. 9 gezeigten Verlauf.

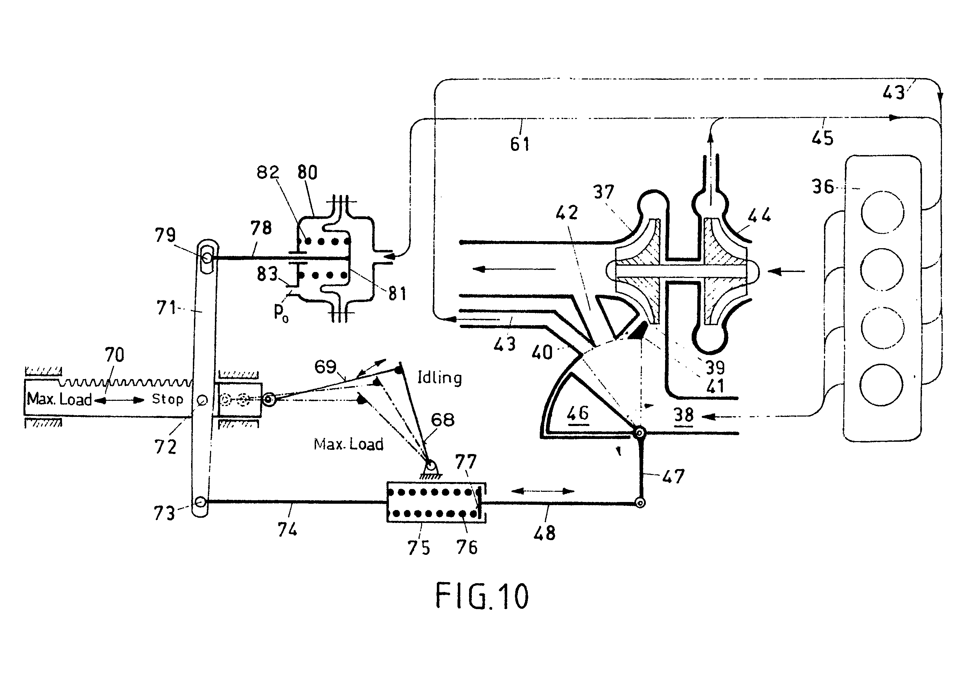

Bei dem in Fig. 10 dargestellten Turboladermotor mit einer anderen Steuerung sind die Teile des Motors inklusive Turbolader mit den gleichen Bezugszahlen bezeichnet wie in Fig. 8. Das Gaspedal 68 ist über ein durch eine Stange 69 symbolisiertes Gestänge mit einer Einspritzpumpenregelstange 70 verbunden. Auf dieser ist ein zweiarmiger Steuerungshebel 71 mittels eines Bolzens 72 schwenkbar verbunden. Am unteren Ende dieses Steuerungshebels ist mittels eines Bolzens 73 eine Stange 74 mit einem Federgehäuse 75 angelenkt. Eine Feder 76 im Federgehäuse belastet einen am Ende der Stange 48 des Drosselschiebers 46 befindlichen Federteller 77 in Richtung auf den offenen Boden des Federgehäuses 75.

Am oberen Ende des Steuerhebels 71 ist eine Stange 78 mit einem in einem Schlitz des Steuerhebels verschieblich gelagerten Bolzen 79 verbunden. Mit ihrem anderen Ende ist die Stange 78 an einer in einem Servomotor 80 eingespannten und durch eine Feder 82 belasteten Membran 81 befestigt. Der federseitige Raum steht über eine Belüftungsleitung 83 mit der Atmosphäre in Verbindung, könnte aber auch vollständig geschlossen sein, so dass in ihm entweder in allen Höhenlagen ein konstanter Druck herrscht oder sich infolge einer Leckage in der Durchführung der Stange 78 in das Gehäuse ein Druckausgleich einstellt. Der Raum auf der anderen Seite im Gehäuse des Servomotors steht über die Steuerluftleitung 61 mit der Ladeluftleitung 45 in Verbindung.

Beim Gasgeben aus dem Leerlauf wird die Regelstange bei räumlich feststehendem Bolzen 79 die Einspritzmenge vergrössert und dabei gleichzeitig über die Glieder 74, 75, 48 der Drosselschieber 46 nach oben geschwenkt und damit die Schluckfähigkeit der Varioturbine 37 reduziert. Durch einen Kickdown kann dieser Vorgang beschleunigt werden, so dass aus einem Lastzustand mit kleinem $p_{me}$ heraus die Schluckfähigkeit der Turbine schlagartig verkleinert und eine hohe Beschleunigung erreicht wird. Sobald der Ladedruck den vorgesehenen Grenzwert erreicht und übersteigt, schiebt er die Membran nach links, wodurch bei nun raumfestem Bolzen 73 über das Gestänge 74, 75, 48 der Drosselschieber 46 wieder zurückschwenkt und damit die Schluckfähigkeit der Varioturbine 37 wieder vergrössert wird.

Die Verbindung der Stangen 74 und 48 mittels der Feder 76 und das Federgehäuse 75 soll gewährleisten, dass die Regelstange 70 beim Loslassen des Gaspedals 68 auf jeden Fall, also beispielsweise auch bei blockiertem Drosselschieber 46, in die Leerlaufstellung zurückkehren kann. Andernfalls würde er mit der Einspritzmenge der jeweils letzten Gaspedalstellung, also beispielsweise mit Vollgas, weiterlaufen.

Bei dieser Steuerung dürfte es ohne zusätzliche Massnahmen nicht möglich sein, eine Regelcharakteristik mit den schmalen Übergangsbereichen gemäss den Fig. 6 und 7 zu erreichen. Bei gewissen Anwendungen wird ein so schnelles Ansprechen aber auch nicht nötig sein.

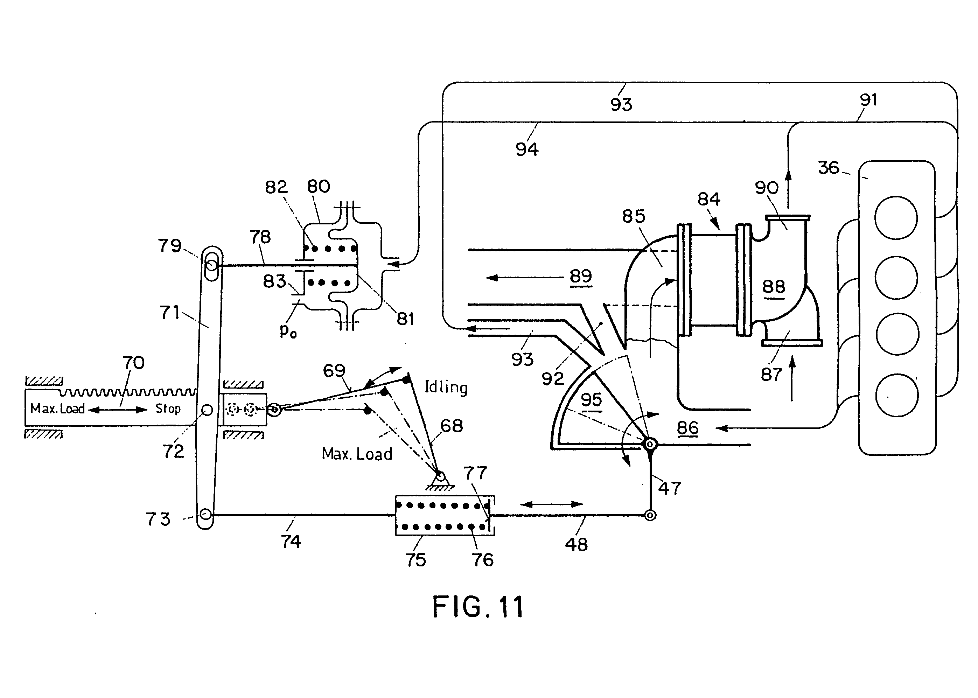

Fig. 11 zeigt die beim Turboladermotor nach Fig. 10 verwendete Steuerungseinrichtung in Kombination mit einem Druckwellenladermotor. Soweit die Elemente bei dieser Ausführung jenen nach Fig. 10 entsprechen, sind ihnen die gleichen Bezugszahlen wie dort zugeordnet. Der Druckwellenlader 84 ist mit seinem Gasgehäuse 85 an den Abgaskanal 86 des Motors 36 angeschlossen und saugt die Verbrennungsluft durch den Ansaugstutzen 87 des Luftgehäuses 88 an. Nach geleisteter Verdichtungsarbeit im Rotor des Druckwellenladers verlassen die Abgase das Gasgehäuse durch den Auspuffkanal 89. Der Auslassstutzen 90 des Luftgehäuses 88 ist an die Ladeluftleitung 91 des Motors angeschlossen. Ein Wastegatekanal 92 zweigt aus dem Gasgehäuse 85 in den Auspuffkanal 89 ab und ein Rezirkulationskanal 93 führt aus dem Gasgehäuse 85 in die Ansaugleitung des Motors 36. Von der Ladeluftleitung 91 zweigt eine Steuerluftleitung 94 in den Servomotor 80 der Steuereinrichtung ab, deren Elemente mit denen der Steuereinrichtung nach Fig. 10 identisch sind und für die daher die dort verwendeten Bezugszahlen beibehalten werden. Der Drosselschieber vor dem Gasgehäuse des Druckwellenladers ist mit 95 bezeichnet.

Der Steuerungsablauf entspricht jenem bei der Ausführung nach Fig. 10, wobei aber der Drosselschieber hier nur zwei Durchflussquerschnitte, nämlich den Wastegate- und den Rezirkulationskanal, zu verschliessen bzw. zu öffnen hat. Es könnte sich als zweckmässig erweisen, auch einen Teil des Abgasdurchflussquerschnittes im Gasgehäuse mit dem Drosselschieber 95 abzusperren.

Was die Anwendung des Verfahrens bei Turboladermotoren betrifft, so eignet es sich nicht nur für Varioturbolader, sondern auch für Turbolader mit nur einem Wastegate bzw. zusätzlich noch mit Rezirkulation wie vorstehend beim Druckwellenladermotor beschrieben.

### Patentansprüche

1. Verfahren zur Aufladung von Verbrennungsmotoren durch Abgaslader mit variablem Abgasschluckvermögen, mit einem Wastegatekanal (42, 92) zum Abblasen überschüssigen Abgases bei hoher Last und mit einem Rezirkulationskanal (43, 93) zur Rückführung eines Teiles der Abgase in die Ladeluft, wobei der Motor (36) in einem unteren Lastbereich als Saugmotor betrieben wird, indem der zum druckerzeugenden Element des Laders führende Hauptstromkanal (39, 85) voll und der Wastegatekanal (42, 92) mindestens teilweise offen gehalten werden und bei Erreichen eines Betriebszustandes mittlerer Belastung die Eintrittsquerschnitte der Abgaswege durch den Abgaslader, den Wastegatekanal (42, 92) und den Rezirkulationskanal (43, 93) bis auf den geringstmöglichen Wert des Durchflussquerschnittes zum druckerzeugenden Element geschlossen werden und mit weiter zunehmender Last kontinuierlich zunächst der Durchflussquerschnitt des Hauptstromkanals (39, 85) voll und anschliessend bis zum Erreichen des maximal zulässigen mittleren Verbrennungsdruckes der Eintrittsquerschnitt des Wastegatekanals (42, 92) geöffnet wird, dadurch gekennzeichnet, dass die Abgaswege bei kleiner Last weiter offen gehalten werden als bei maximaler Last, indem der Eintrittsquerschnitt des Wastegatekanals (42, 92) voll und zusätzlich noch der Rezirkulationskanal (43, 93) voll geöffnet werden.

2. Verfahren nach Anspruch 1, dadurch gekennzeichnet, dass die freien Querschnitte der Abgaswege während der für einen Gangwechsel beim Beschleunigen erforderlichen Zeitspanne konstant gehalten werden.

3. Verfahren nach Anspruch 1, dadurch gekennzeichnet, dass die mittleren effektiven Drücke $p_{me}$ der Schaltzone (27), in der die Querschnitte der Abgaswege auf den geringstmöglichen Durchflussquerschnitt des druckerzeugenden Elements geschlossen werden, im ganzen Drehzahlbereich des Motors konstant gehalten werden (Fig. 6).

4. Verfahren nach Anspruch 1, dadurch gekennzeichnet, dass die mittleren effektiven Drücke $p_{me}$ der Schaltzone (32) in einem unteren Drehzahlbereich konstant gehalten und im anschliessenden Drehzahlbereich direkt proportional zunehmend verlaufen (Fig. 7).

5. Verfahren nach Anspruch 1, dadurch gekennzeichnet, dass die mittleren effektiven Drücke $p_{me}$ der Schaltzone (32') über den ganzen Drehzahlbereich direkt proportional zunehmend verlaufen (Fig. 7).

6. Mit dem Aufladeverfahren nach Patentanspruch 1 arbeitender Verbrennungsmotor, mit einem Turbolader mit variabler Schluckfähigkeit der Turbine, mit einem Wastegate und einer Steuereinrichtung mit einem Drosselorgan (46) zur Steuerung der freien Durchflussquerschnitte der Turbine (37) und des Wastegatekanals (42), gekennzeichnet durch einen Rezirkulationskanal (43), durch eine Stelleinrichtung (50) zur Betätigung des Drosselorgans (46) bei Einleitung einer Beschleunigung des Motors (36), wobei der Schwenkbereich des Drosselorgans (46) so ausgelegt ist, dass seine abdichtende Fläche einen Teil des Eintrittsquerschnitts des Hauptstromkanals (39) und die Eintrittsquerschnitte des Wastegatekanals (42) und des Rezirkulationskanals (43) überdecken kann, sowie durch Organe (54, 57) zur Umformung von Grössen, die vom Lastzustand des Motors abhängen, in Steuerimpulse an die Stelleinrichtung (50) (Fig. 8).

7. Verbrennungsmotor nach Anspruch 6, dadurch gekennzeichnet, dass das Drosselorgan als schwenkbarer Drosselschieber (46) ausgebildet ist, dass die Stelleinrichtung eine pneumatische Dose (50) mit federbelasteter Membran (49) ist, die über eine Stange (48) mit einem Hebelarm (47) des Drosselschiebers (46) verbunden ist, dass die Organe zur Umformung der vom Lastzustand des Motors abhängigen Grössen aus einem Steuerdruckmodulator (57) und aus einem Steuerzylinder (54) bestehen, wobei ein federbelasteter Stufenkolben (59) im Steuerdruckmodulator (57) einerseits über eine Steuerluftleitung (61) vom Ladedruck, andererseits vom Unterdruck einer Vakuumquelle (62) beaufschlagbar ist und ein Steuerkolben (63) des Steuerzylinders (54) über ein federelastisches Glied (66) derart mit einer Kraftstoffeinspritzregelstange (67) verbunden ist, dass er in einem gewissen Betriebspunkt mit niedriger Last beim Beschleunigen des Motors die Verbindung zwischen dem vakuumbeaufschlagten Raum des Steuerdruckmodulators (57) und dem federseitigen Raum der pneumatischen Dose (50) herstellt und beim Verzögern des Motors unterbricht (Fig. 8).

8. Verbrennungsmotor nach Anspruch 7, dadurch gekennzeichnet, dass der Steuerzylinder (63) ein Rückschlagventil (64) und eine Dämpfungsbohrung (65) aufweist, die dazu dienen, ein Zurückschwenken des Drosselschiebers (46) bei Gangwechseln während der Beschleunigung des Fahrzeuges zu verhindern (Fig. 8).

9. Mit dem Aufladeverfahren nach Patentanspruch 1 arbeitender Verbrennungsmotor, mit einem Abgaslader, der ein Wastegate aufweist, mit einer Steuereinrichtung mit einem Drosselorgan (46; 95) zur Steuerung des freien Durchflussquerschnittes des Hauptstromkanals des Laders und des Wastegatekanals (42; 92), gekennzeichnet durch einen Rezirkulationskanal (43, 93), durch eine durch ein Gaspedal (68) betätigbare Stelleinrichtung (68–77, 48, 47) zur Betätigung des Drosselorgans (46; 95) bei Einleitung einer Beschleunigung des Motors (36), wobei der Schwenkbereich des Drosselorgans (46) so ausgelegt ist, dass seine abdichtende Fläche einen Teil des Eintrittsquerschnitts des Hauptstromkanals (39) und die Eintrittsquerschnitte des Wastegatekanals (42) und des Rezirkulationskanals (43) überdecken kann, sowie durch einen Servomotor (80), der mit der Stelleinrichtung (68–77, 48, 47) gekuppelt ist und die Stellung des Drosselorgans (46; 95) in Abhängigkeit vom Lastzustand des Motors (36) steuert (Fig. 10 und 11).

10. Verbrennungsmotor nach Anspruch 9, mit einem Varioturbolader als Abgaslader, dadurch gekennzeichnet, dass das Drosselorgan als schwenkbarer Drosselschieber (46) ausgebildet ist, dass die Stelleinrichtung ein Gaspedal (68), eine Stange (69), einen an einer Einspritzpumpenregelstange (70) schwenkbar gelagerten, zweiarmigen Steuerungshebel (71), eine Stange (74) mit einem Federgehäuse (75), eine im Federgehäuse (75) eingespannte Druckfeder (76) und einen mit der Stange (48) des Drosselschiebers (46) verbundenen Federteller (77) aufweist, und dass der Servomotor aus einer pneumatischen Dose (80) besteht, deren federbelastete Membran (81) über eine von der Ladeluftleitung (45) abzweigende Steuerluftleitung (61) mit dem Ladeluftdruck beaufschlagt wird und über eine Stange (78) und einen Bolzen (79) mit dem Steuerungshebel (71) verbunden ist (Fig. 10).

11. Verbrennungsmotor nach Anspruch 9, mit einem gasdynamischen Druckwellenlader (84) als Abgaslader, dadurch gekennzeichnet, dass das Drosselorgan als Drosselschieber (95) ausgebildet ist, dass die Stelleinrichtung ein Gaspedal (68), eine Stange (69), einen an einer Einspritzpumpenregelstange (70) schwenkbar gelagerten, zweiarmigen Steuerungshebel (71), eine Stange (74) mit einem Federgehäuse (75), eine im Federgehäuse (75) eingespannte Druckfeder (76) und einen mit der Stange (48) des Drosselschiebers (46) verbundenen Federteller (77) aufweist, und dass der Servomotor aus einer pneumatischen Dose (80) besteht, deren federbelastete Membran (81) über eine von der Ladeluftleitung (91) abzweigende Steuerluftleitung (94) mit dem Ladeluftdruck beaufschlagt wird und über eine Stange (78) und einen Bolzen (79) mit dem Steuerungshebel (71) verbunden ist (Fig. 11).

**Claims**

1. Method for supercharging internal combustion engines by an exhaust gas supercharger with a variable exhaust gas swallowing capacity, having a wastegate duct (42, 92) for blowing off excess exhaust gas at high load and having a recirculation duct (43, 93) for feeding back part of the exhaust gases into the charge air, the engine (36) being operated as a normally induced engine in the lower load range by keeping the main flow duct (39, 85) leading to the pressure generating element of the supercharger fully open and by keeping the wastegate duct (42, 92) at least partially open and, on attaining an operating condition of medium load, the inlet cross-sections of the exhaust gas paths through the exhaust gas supercharger, the wastegate duct (42, 92) and the recirculation duct (43, 93) being closed down to the smallest possible value of the flow cross-section of the pressure generating element and, with further increasing load, the flow cross-section of the main flow duct (39, 85) being first continuously fully opened and, subsequently, until the maximum permissible mean combustion pressure is reached, the entry cross-section of the wastegate duct (42, 92) being opened, characterized in that the exhaust gas paths are kept further opened at small load than at maximum load by the inlet cross-section of the wastegate duct (42, 92) being fully opened and, in addition, the recirculation duct (43, 93) being fully opened.

2. Method according to Claim 1, characterized in that the free cross-sections of the exhaust gas paths are kept constant during the time necessary for a change of gear during acceleration.

3. Method according to Claim 1, characterized in that the mean effective pressures $p_{me}$ of the gear changing zone (27), in which the cross-sections of the exhaust gas paths are closed to the smallest possible flow cross-section of the pressure generating element, are kept constant over the whole speed range of the engine (Figure 6).

4. Method according to Claim 1, characterized in that the mean effective pressures $p_{me}$ of the gear changing zone (32) are kept constant in a lower speed range and vary in direct proportion over the subsequent speed range (Figure 7).

5. Method according to Claim 1, characterized in that the mean effective pressures $p_{me}$ in the gear changing zone (32') vary in direct proportion over the whole speed range (Figure 7).

6. Internal combustion engine operating with the supercharging method according to Claim 1, having a turbocharger with variable turbine swallowing capacity, having a wastegate and a control device with a throttle element (46) for the control of the free flow cross-sections of the turbine (37) and the wastegate duct (42), characterized by a recirculation duct (43), by an adjustment device (50) for actuating the throttle element (46) during the initiation of an acceleration of the engine (36), the pivoting range of the throttle element (46) being so designed that its sealing surface can cover a part of the inlet cross-section of the main flow duct (39) and the inlet cross-sections of the wastegate duct (42) and the recirculation duct (43), and by elements (54, 57) which convert parameters depending on the load condition of the engine into control pulses at the adjustment device (50) (Figure 8).

7. Internal combustion engine according to Claim 6, characterized in that the throttle element is designed as a pivotable throttle valve (46), that the adjustment device is a pneumatic cell (50) with a spring-loaded diaphragm (49), which is connected by means of a rod (48) to a lever arm (47) of the throttle valve (46), that the elements for converting the parameters dependent on the load condition of the engine consist of a control pressure modulator (57) and a control cylinder (54), it being possible to subject a spring-loaded stepped piston (59) in the control pressure modulator (57), on the one hand, to the supercharge pressure – via a control air connection (61) – and, on the other hand, to the partial vacuum of a vacuum source (62) and a control piston (63) of the control cylinder (54) being connected via an elastic spring element (66) to a fuel injection control rod (67) in such a way that, at a certain low load operating point, it makes the connection between the vacuum space of the control pressure modulator (57) and the spring side space of the pneumatic cell (50) when the engine is accelerated and interrupts it when the engine is decelerated (Figure 8).

8. Internal combustion engine according to Claim 7, characterized in that the control cylinder (63) has a non-return valve (64) and a damping hole (65) which act to prevent the throttle valve (46) from pivoting back during a gear change occurring while the vehicle is being accelerated (Figure 8).

9. Internal combustion engine operating with the supercharging process according to Claim 1, having an exhaust gas supercharger, which has a wastegate, having a control device with a throttle element (46; 95) for controlling the free flow cross-section of the main flow duct of the supercharger and the wastegate duct (42; 92), characterized by a recirculation duct (43, 93), by an accelerator (68) actuated adjustment device (68–77, 48, 47) for actuating the throttle element (46; 95) when an acceleration of the engine (36) is initiated, the pivoting range of the throttle element (46) being so designed that its sealing surface can cover a part of the inlet cross-section of the main flow duct (39) and the inlet cross-sections of the wastegate duct (42) and the recirculation duct (43), and by a servomotor (80), which is connected to the adjustment device (68–77, 48, 47) and controls the position of the throttle element (46; 95) as a function of the load condition of the engine (36) (Figures 10 and 11).

10. Internal combustion engine according to Claim 9, having a vario-turbocharger as the exhaust gas supercharger, characterized in that the throttle element is designed as a pivotable throttle valve (46), that the adjustment device has an accelerator (68), a rod (69), a double-armed control lever (71) pivotably supported on an injection pump control rod (70), a rod (74) with a spring casing (75), a compression spring (76) clamped in the spring casing (75) and a plate spring (77) connected to the rod (48) of the throttle valve (46), and that the servomotor consists of a pneumatic cell (80), whose springloaded diaphragm (81) is subjected to the supercharge air pressure via a control air connection (61) branching from supercharge air connection (45) and is connected to the control lever (71) via a rod (78) and a pin (79) (Figure 10).

11. Internal combustion engine according to Claim 9, having a gas-dynamic pressure wave supercharger (84) as the exhaust gas supercharger, characterized in that the throttle element is designed as a pivotable throttle valve (95), that the adjustment device has an accelerator (68), a rod (69), a double-armed control lever (71) pivotably supported on an injection pump control rod (70), a rod (74) with a spring casing (75), a compression spring (76) clamped in the spring casing (75) and a plate spring (77) connected to the rod (48) of the throttle valve (46), and that the servomotor consists of a pneumatic cell (80), whose spring-loaded diaphragm (81) is subjected to the supercharge air pressure via a control air connection (94) branching from supercharge air connection (91) and is connected to the control lever (71) via a rod (78) and a pin (79) (Figure 11).

**Revendications**

1. Procédé de suralimentation de moteurs à combustion interne par turbocompresseur avec capacité variable d'avalement de gaz d'échappement, comportant un canal de limitation de la pression de suralimentation (42, 92) pour évacuer les gaz d'échappement en excès sous forte charge et un canal de recirculation (43, 93) pour renvoyer une fraction des gas d'échappement dans l'air de suralimentation, étant entendu que, dans un domaine de charge inférieur, le moteur (36) fonctionne comme un moteur à aspiration naturelle, par le fait que le canal de flux principal (39, 85) aboutissant à l'élément générateur de pression du compresseur et le canal de limitation de la pression de suralimentation (42, 92) sont respectivement complètement et au moins partiellement maintenus ouverts et que, lorsqu'un état de fonctionnement à charge moyenne est atteint, les sections d'entrée des passages pour les gaz d'échappement passant par le turbocompresseur, le canal de limitation de la pression de suralimentation (42, 92) et le canal de recirculation (43, 93) sont fermés jusqu'à la valeur la plus faible possible de la section de passage en direction de l'élément générateur de pression et que, à mesure que la charge augmente par la suite de manière continue, initialement la section de passage du canal de flux principal (39, 85) est complètement ouverte et ensuite, jusqu'à ce que la pression de combustion moyenne maximale admissible soit atteinte, la section d'entrée du canal de limitation de la pression de suralimentation (42, 92) est ouverte, caractérisé en ce que les passages pour les gaz d'échappement sont maintenus davantage ouverts dans le cas d'une charge faible que dans le cas d'une charge maximale par le fait que la section d'entrée du canal de limitation de la pression de suralimentation (42, 92) est ouverte complètement et qu'en outre le canal de recirculation (43, 93) est ouvert complètement.

2. Procédé suivant la revendication 1, caractérisé en ce que les sections libres des passages pour les gaz d'échappement sont maintenues constantes pendant la période nécessaire à un changement de vitesse lors d'une accélération.

3. Procédé suivant la revendication 1, caractérisé en ce que les pressions effectives moyennes $p_{me}$ de la zone de changement (27) dans laquelle les sections des passages pour les gaz d'échappement sont fermées jusqu'à une section de passage la plus faible possible de l'élément générateur de pression, sont maintenues constantes dans la totalité de la plage de régimes du moteur (Fig. 6).

4. Procédé suivant la revendication 1, caractérisé en ce que les pressions effectives moyennes ($p_{me}$) de la zone de changement (32) sont maintenues constantes dans une plage de régimes inférieure et s'accroissent d'une manière directement proportionnelle dans la plage de régimes adjacente (Fig. 7).

5. Procédé suivant la revendication 1, caractérisé en ce que les pressions effectives moyennes ($p_{me}$) dans la zone de changement (32') croissent d'une manière directement proportionnelle sur la totalité de la plage de régimes (Fig. 7).

6. Moteur à combustion interne fonctionnant sur base du procédé de suralimentation selon la revendication 1, comportant un turbocompresseur avec une capacité d'avalement variable de la turbine, une valve limiteuse de la pression de suralimentation et un dispositif de commande avec un organe d'étranglement (46) pour régir les sections de passage libres de la turbine (37) et du canal de limitation de la pression de suralimentation (42), caractérisé par un canal de recirculation (43), par un dispositif de positionnement (50) pour actionner l'organe d'étranglement (46) lors de l'amorçage d'une accélération du moteur (36), étant entendu que le domaine de pivotement de l'organe d'étranglement (46) est tel que sa face d'étanchéité puisse couvrir une partie de la section d'entrée du canal à flux principal (39) et des sections d'entrée du canal de limitation de la pression de suralimentation (42) et du canal de recirculation (43), ainsi que par des organes (54, 57) pour convertir des grandeurs qui dépendent de l'état de charge du moteur, en impulsions de commande au niveau du dispositif de positionnement (50) (Fig. 8).

7. Moteur à combustion interne suivant la revendication 6, caractérisé en ce que l'organe d'étranglement a la forme d'un registre étrangleur pivotant (46), le dispositif de positionnement est une capsule pneumatique (50) à membrane rappelée par ressort (49) qui est reliée par l'intermédiaire d'une tringle (48) à un bras de levier (47) du registre étrangleur (46), les organes destinés à convertir les grandeurs dépendant de l'état de charge du moteur sont formés par un modulateur de pression de commande (57) et un cylindre de commande (54), un piston étagé rappelé par ressort (59) dans le modulateur de pression de commance (57) pouvant être soumis à l'action d'une part de la pression de suralimentation par l'intermédiaire d'une conduite d'air de commande (61) et d'autre part de la dépression d'une source de dépression (62) et un piston de commande (63) du cylindre de commande (54) étant relié par l'intermédiaire d'un élément à élasticité de ressort (66) à une tige de réglage de l'injection de carburant (67) d'une manière telle que, à un certain point de fonctionnement à charge faible, lors de l'accélération du moteur, il établisse la liaison entre l'espace sous vide du modulateur de pression de commande (57) et l'espace du côté ressort de la capsule pneumatique (50) et, lors d'une décélération du moteur, il interrompe cette liaison (Fig. 8).

8. Moteur à combustion interne suivant la revendication 7, caractérisé en ce que le cylindre de commande (63) comporte un clapet antiretour (64) et une lumière d'amortissement (65) qui servent à empêcher un pivotement en retour du registre d'étranglement (46) lors d'un changement de vitesse pendant l'accélération du véhicule (Fig. 8).

9. Moteur à combustion interne fonctionnant à l'aide du procédé de suralimentation suivant la revendication 1 équipé d'un turbocompresseur qui comporte un limiteur de la pression de suralimentation ainsi qu'un dispositif de commande avec un organe d'étranglement (46, 95) pour commander la section de passage libre du canal de flux principal du turbocompresseur et du canal de limitation de la pression de suralimentation (42, 92), caractérisé par un canal de recirculation (43, 93), par un dispositif de positionnement (68–77, 48, 47) pouvant être actionné par une pédale des gaz (68) pour actionner l'organe d'étranglement (46, 95) lors de l'amorce d'une accélération du moteur (36), étant entendu que le domaine de pivotement de l'organe d'étranglement (46), est tel que sa surface d'étanchéité puisse recouvrir une partie de la section d'entrée du canal de flux principal (39) et les sections d'entrée du canal de limitation de la pression de suralimentation (42) et du canal de recirculation (43), et par un servomoteur (80) qui est couplé au dispositif de positionnement (68–77, 48, 47) et régit le positionnement de l'organe d'étranglement (46, 95) en fonction de l'état de charge du moteur (36) (Fig. 10 et 11).

10. Moteur à combustion interne suivant la revendication 9 comportant un turbocompresseur variable comme compresseur actionné par les gaz d'échappement, caractérisé en ce que l'organe d'étranglement a la forme d'un registre étrangleur pivotant (46), le dispositif de positionnement comprend une pédale des gaz (68), une tringle (69), un levier de commande à deux bras (71) pivotant sur une tige de réglage de pompe d'injection (70), une tringle (74) avec un boîtier de ressort (75), un ressort de pression (76) mis sous contrainte dans le boîtier de ressort (75) et une coupelle de ressort (77) reliée à la tringle (48) du registre étrangleur (46) et le servomoteur est formé d'une capsule pneumatique (80) dont la membrane rappelée par ressort (81) est alimentée au moyen de la pression de l'air de suralimentation par l'intermédiaire d'une conduite d'air de commande (61) branchée sur la conduite d'air de suralimentation (45) et est reliée par l'intermédiaire d'une tringle (78) et d'un goujon (79) au levier de commande (71) (Fig. 10).

11. Moteur à combustion interne suivant la revendication 9, comportant un compresseur à onde de pression à dynamique de gaz (84) comme compresseur de suralimentation à gaz d'échappement, caractérisé en ce que l'organe d'étranglement a la forme d'un registre étrangleur (95), le dispositif de positionnement comporte une pédale des gaz (68), une tringle (69), un levier de commande à deux bras (71) monté à pivot sur une tige de réglage de pompe d'injection (74), une tringle (74) avec un boîtier de ressort (75), un ressort de compression (76) bandé dans le boîtier de ressort (75) et une coupelle de ressort (77) reliée à la tringle (48) du registre étrangleur (46), et le servomoteur est formé d'une capsule pneumatique (80) dont la membrane à ressort (81) est alimentée au moyen de la pression de l'air de suralimentation par l'intermédiaire d'une conduite d'air de commande (94) branchée sur la conduite d'air de suralimentation (91) et est reliée par l'intermédiaire d'une tringle (78) et d'un goujon (79) au levier de commande (71) (Fig. 11).

Fig. 1

Fig. 2

FIG.4

FIG. 3

FIG. 5

17

Fig. 6

Fig. 7

FIG.8

**Fig. 9**

FIG.10

FIG. 11